# EUROPÄISCHE PATENTSCHRIFT

(11) **EP 2 106 535 B1**
(45) Veröffentlichungstag und Bekanntmachung des Hinweises auf die Patenterteilung: **02.02.2011**
(21) Anmeldenummer: 07856043.0
(22) Anmeldetag: 29.11.2007
(51) Int. Cl.: G01F 11/28

(54) **DOSIERVORRICHTUNG ZUM PRÄZISEN DOSIEREN VON VERSCHIEDENEN PORTIONEN VON FLÜSSIGEM SPENDENGUT AUS EINEM BEHÄLTNIS**
DOSING DEVICE FOR PRECISELY DOSING DIFFERENT QUANTITIES OF A LIQUID PRODUCT TO BE DISPENSED FROM A CONTAINER
DISPOSITIF DE DOSAGE PRÉCIS DE DIFFÉRENTES DOSES D'UN PRODUIT LIQUIDE À DÉLIVRER ET CONTENU DANS UN CONTENANT

(30) Priorität: 30.11.2006 DE 102006056947
(43) Veröffentlichungstag der Anmeldung: 07.10.2009
(73) Patentinhaber: Laskowski, Sigismund, 68159 Mannheim (DE)
(72) Erfinder: Laskowski, Sigismund, 68159 Mannheim (DE)
(74) Vertreter: Mierswa, Klaus
(86) Internationale Anmeldenummer: PCT/DE2007/002152
(87) Internationale Veröffentlichungsnummer: WO 2008/064664

(56) Entgegenhaltungen:
- EP-A- 0 809 091
- WO-A-96/03625
- WO-A-99/60348
- GB-A- 777 862
- US-A- 4 211 346
- US-A- 4 474 312

## Beschreibung

Die Erfindung betrifft eine Dosiervorrichtung zum präzisen Dosieren von verschiedenen Portionen von flüssigem Spendengut aus einem Behältnis mit elastisch verformbaren Wänden, bestehend aus einem auf das Behältnis luftdicht aufgesetzte Verschlussteil und aus einem darauf aufgesetzten Messraumgehäuse, welches einen Messraum aufweist, welcher beim Zusammendrücken der elastisch verformbaren Wände des Behältnisses über ein in das Behältnis ragende Steigrohr mit einer unteren Einlassöffnung, einem Führungskanal und einer oberen Austrittsöffnung mit flüssigem Spendengut aus dem Behältnis versorgbar ist, wobei das Messraumgehäuse auf dem Steigrohr höhenveränderlich angeordnet ist, wobei auf dem Verschlussteil des Behältnisses ein die obere Austritts- und Ansaugöffnung aufweisendes Führungsröhrchen fest angeordnet ist, welches in Fortsetzung des Steigrohres mit demselben in Verbindung steht, gemäß dem Oberbegriff des Anspruchs 1.

### Stand der Technik:

Aus dem Stand der Technik, zum Beispiel aus der PCT/EP2005/000799 sind mehrere Ausführungen von Dosiervorrichtungen bekannt, bei denen immer eine präzise Ermittlung von unterschiedlichen Mengen eines Spendengutes aus demselben Messraum, möglich ist.

Durch diese Erfindung ist bekannt, dass beispielsweise eine deutliche Reduzierung der Menge der Ausführungen der Messraum-Größen möglich ist, da aus einem und derselben Messraum der beispielsweise maximal 50 ml Volumen aufweist, auch beispielsweise 10 ml, 20 ml, usw. präzise dosierbar sind.

Als Nachteil ist jedoch anzusehen, dass hier die Herstellungskosten dieser Dosiervorrichtung relativ hoch sind, da einerseits ihre Elemente aufwendig herstellbar sind, andererseits in einem relativ teuren Montagevorgang miteinander verbunden werden müssen, was ihr Einsatz, insbesondere bei kostengünstigen Produkten, erschwert.

Weiterhin ist als Nachteil anzusehen, dass jede Änderung der dosierbaren Menge eines Spendengutes den Abrieb der Abdichtung eines Steigrohrabschnitts-Kanals verursacht, der irgendwann so groß sein kann, dass die gewünschte Dichte der Verbindung nicht mehr gegeben ist und somit eine einwandfreie Funktion der Dosiervorrichtung nicht vorhanden ist.

Durch die US-A-4 211 346 ist eine Dosiervorrichtung zum präzisen Dosieren von verschiedenen Portionen von flüssigem Spendengut aus einem Behältnis mit elastisch verformbaren Wänden bekannt geworden, bestehend aus einem auf das Behältnis luftdicht aufgesetzte Verschlussteil und aus einem darauf aufgesetzten Messraumgehäuse. Das Messraumgehäuse weist einen Messraum auf, welcher beim Zusammendrücken der elastisch verformbaren Wände des Behältnisses über ein in das Behältnis ragende Steigrohr mit einer unteren Einlassöffnung, einem Führungskanal und einer oberen Austrittsöffnung am Austrittsende mit flüssigem Spendengut aus dem Behältnis versorgbar ist. Das Messraumgehäuse ist auf dem Steigrohr höhenveränderlich angeordnet, und auf dem Verschlussteil des Behältnisses ist ein die obere Austritts- und Ansaugöffnung aufweisendes Führungsröhrchen fest angeordnet, welches in Fortsetzung des Steigrohres mit demselben in Verbindung steht. Ein Steuerungs- und Fixierungselement am unteren Ende des Messraumgehäuses ist axial verschiebbar auf den Führungsröhrchen angeordnet. Diese Dosiervorrichtung besitzt den Nachteil, dass nur eine Dosierung per Hand möglich ist und nach längerem Gebrauch und Handhabung der Dosiervorrichtung deren Dichtigkeit abnimmt.

Des Weiteren ist durch die GB-A-777 862 eine Dosiervorrichtung bekannt geworden, welche ähnlich des vorbeschriebenen Standes der Technik aufgebaut ist. Hier ist auf ein in das Behältnis ragende Steigrohr ein Messraumgehäuse aufgesetzt, wobei die Dichtigkeit zwischen Messraumgehäuse und dem Steigrohr durch eine Dichtmanschette bewirkt wird. Auch diese Dosiervorrichtung besitzt den Nachteil, dass nur eine Dosierung per Hand möglich ist und nach längerem Gebrauch und Handhabung der Dosiervorrichtung deren Dichtigkeit abnimmt.

### Technische Aufgabe:

Der Erfindung liegt die Aufgabe zugrunde, die aus dem Stand der Technik bekannten Dosiervorrichtungen für flüssiges Spendengut derart weiter zu entwickeln, dass wenigstens die vorgenannten Nachteile ganz oder teilweise behoben werden können, insbesondere eine alternative Abdichtung zwischen Führungsröhrchen und Messraum zu erzielen.

### Offenbarung der Erfindung sowie deren Vorteile:

Die Aufgabe wird bei einer Dosiervorrichtung der eingangs genannten Gattung erfindungsgemäß dadurch gelöst, dass das Führungsröhrchen ein Außengewinde aufweist, auf welchem ein Steuerungs- und Fixierungselement als Mutter gemäß dem Schraube-Mutter-Prinzip drehbeweglich angeordnet ist, wobei auf das Steuerungs- und Fixierungselement das Messraumgehäuse aufgesetzt ist, welches bei Drehen des Steuerungs- und Fixierungselements zwingend eine axiale Verschiebung erfährt, wobei auf dem in den Messraum ragende Führungsröhrchen ein elastisch verformbarer Faltenbalg angeordnet ist, welcher dicht und fest sowohl am Boden des Messraumes als auch unterhalb der Austritts- und Ansaugöffnung des Führungsröhrchens an demselben befestigt ist.

Weitere vorteilhafte Ausgestaltungen der Erfindung sind in den Unteransprüchen gekennzeichnet.

Wichtig dabei ist, dass eine Verlagerung des Messraumgehäuses einer erfindungsgemäßen Dosiervorrichtung indirekt erfolgt, in dem ein Steuerungs- und Fixierungselement, der einen Bereich zum Anfassen aufweisen muss, beispielsweise ein Drehring, mittels dessen manuell, in eine vorgegebene Drehrichtung, nach links oder nach rechts, zu drehen ist. Dieser Drehvorgang erzwingt seine gleichzeitige Verlagerung in axialer Richtung, was mittels seiner beweglichen Gewindeverbindung mit einem starr angeordneten Fühiungsröhrchen erreichbar ist, wie beispielsweise Schraube-Mutter Prinzip. Nur diese axiale Verlagerung des Steuerungs- und Fixierungselementes muss auf das mit ihm gleitend, jedoch ausfallsicher gekoppelte Messraumgehäuse solange übertragen werden, bis die Fixierlasche des Steuerungs- und Fixierelementes, in einen vorgegebene Fixiernest des mit ihm zusammenwirkenden Messraumgehäuses einrastet. Die Fixierlasche muss so gestaltet sein, dass sie während der Drehbewegung des Steuerungs- und Fixierungsteils an den Zwischenabschnitten eines Messraumgehäuses vorbei gleitet, ohne sie oder sich zu beschädigen und in jeden der vorhandenen Fixiernester immer präzise einrastet. Das jeweils erreichte Fixiernest muss durch eine daneben angebrachte Zahl, Buchstabe oder Farbe, usw., die vorgewählte Größe der Spendengutportion sich eindeutig zuordnen lassen.

Um die Herstellung eines Steuerungs- und Fixierungselementes zu erleichtern insbesondere seiner Bereiche wo die Einrasteabschnitte angebracht sind, sind in seinem Boden mindestens so große Ausnehmungen zu gestalten, was ein wichtiges Merkmal der Erfindung ist.

Ebenfalls ein sehr wichtiges Merkmal der Erfindung ist, dass das Gewinde am Führungsröhrchen und einem mit ihm kompatiblen Steuerungs- und Fixierelement, jede beliebige Form und jeden beliebigen Verlauf haben kann, wobei darauf zu achten ist, dass jede Fixiernest immer nur einer bestimmten Menge eines dosierbaren Spendengutes zugeordnet ist, wenn die Fixierlasche in ihn zweckmäßig einrastet. Dies ist erfindungsgemäß beispielsweise dadurch erreichbar, dass der Gewindesprung so groß zu wählen ist, dass alle Einrastenester an einem Messraumgehäuse innerhalb einer geringeren Drehbewegung des Steuerungs- und Fixierungselementes als 360 Grad, erreicht werden können. Während dieses Vorgangs muss das Messraumgehäuse, sich von seiner tiefsten, axialen Lage in seine maximal ausgefahrene, axiale Lage, oder umgekehrt, verlagern.

Erfindungsgemäß muss ein Messraumgehäuse in seinem unteren Bereich einen Einrastekragen aufweisen, mittels dessen dieses mit einem Steuerungs- und Fixierelement gleitend jedoch untrennbar zu verbinden ist. Um die dabei eventuell entstehende Reibung zu reduzieren, können im Boden des Steuerungs- und Fixierungselementes zweckmäßige Aussparungen vorgesehen werden, oder zwischen die beide Kontaktflächen, ein Gleitmittel zu bringen ist.

Inhalt dieser Erfindung sind auch alle Ausführungen, wo zu einer axialen Verlagerung eines Messraumgehäuses aus seiner tiefsten Position in seine maximal ausgefahrenen Position, das erfindungsgemäße Steuerungs- und Fixierungselement um mehr als 360 Grad zu drehen ist Hier ist darauf zu achten, dass seine Lasche, nach ihrem jeweiligen Einrasten in ein Einrastenest, immer eindeutig die gerade vorgewählte Spendengutportion anzeigt, in dem sie beispielsweise als eine Schleppfixierlasche zu gestalten ist.

Erfindungsgemäß dichtet eine Abdeckkappe den Messraum in jeder seiner Lagen, wobei die Austrittsöffnung in einem Führungsröhrchen nur in der tiefsten Position des Messraumgehäuses, abgedichtet werden kann. Wird das Messraumgehäuse aus dieser Position weit genug verlagert, wird die Austrittsaffnung frei.

Nächstes sehr wichtiges Merkmal der Erfindung ist, dass ein erfindungsgemäßes Messraumgehäuse, hauptsächlich gerade und axial verlaufende Bewegungen nach oben oder nach unten auszuführen hat, wobei dies durch Drehbewegungen des mit ihm zweckmäßig gekoppelten Steuerungs- und Fixierungselementes zu steuern und zu fixieren ist.

Somit kann erfindungsgemäß auf alle, sich durch Reibung abnutzbare Teile im Messraumgehäuse verzichtet werden und eine sehr vorteilhafte, weil immer dichte und kostengünstige Verbindung zwischen dem Führungsröhrchen und einem mit ihm zusammenwirkenden Messraumgehäuse garantiert werden kann, in dem die Unterschiede zwischen den einzelnen Positionen des Messraumgehäuses gegenüber dem fest verankerten Führungsröhrchen, insbesondere der in ihm angebrachten Austritts- und Ansaugöffnung, mittels einer Dehnung oder eines Zusammenlegen eines zweckmäßigen Faltenbalgs, auszugleichen sind. In einer besonders bevorzugten Ausführung der Erfindung ist der Faltenbalg als Bestandsteil eines Messraumgehäuses anzufertigen, wodurch nur sein oberer Abschnitt mit dem Führungsröhrchen, jedoch immer unterhalb der Austrittsöffnung, luftdicht und dauerhaft zu verbinden ist, zum Beispiel mittels eines Ultraschalls. Dabei muss die aktive Länge eines Faltenbalgs immer so gewählt werden, dass auch in einer maximal ausgefahrenen Position eines Messraumgehäuses, keine unerwünschten Spannungen in dem Faltenbalg entstehen.

Weiteres wichtiges Merkmal der Erfindung ist auch, dass die Verbindung zwischen einem Faltenbalg und einem Führungsröhrchen immer so stark sein muss, dass ein ungewolltes Herausfallen des Messraumgehäuses immer verhindert wird.

Weiteres wichtiges Merkmal der Erfindung ist, dass hier ein luftdichtes Verschließen einer Austritt- und Ansaugöffnung in dem unbeweglich angeordneten Führungsröhrchen, mittels einer Abdeckkappe eines Messraumgehäuses und nur in seiner tiefsten Position zu erfolgen hat. Wird das Messraumgehäuse aus dieser Position herausgehoben, wird die Austritt- und Ansaugöffnung freigelegt.

Die wichtigsten Aufgaben der Erfindung wurden dadurch gelöst, dass einerseits ein kostengünstiges Dosiersystem entstanden ist, andererseits wurde dieses so gestaltet, dass keine sich abnutzbare Elemente im Messraum angeordnet sind und somit keinen Einfluss auf die Dichte der Verbindungen im Messraum haben, insbesondere wenn eine ausreichende Länge eines aktiven Bereiches eines Faltenbalgs gegeben ist.

Weiterhin wurde erfindungsgemäß erreicht, dass das Messraumgehäuse hauptsächlich nur einfache, geradlinige Bewegungen auszuüben hat, während ein ihn lenkendes Steuerungs- und Fixierungselement hauptsächlich Drehbewegungen auszuführen hat, die auf einem starr angebrachten Führungsröhrchen eines Verschluss- und Führungsteil zu erfolgen haben, wobei die dabei entstehende Höhenunterschiede zwischen dem beweglichen Boden eines Messraumes und der fest fixierten Austritt- und Ansaugöffnung durch ein Dehnen oder ein Zusammenziehen eines erfindungsgemäßen Faltenbalgs, zu überbrücken sind

Weiteres Grundprinzip der Erfindung liegt in einer starren Anordnung einer Austritt- und Ansaugöffnung und einer vorwiegend axial beweglichen Verlagerung eines Messraumgehäuses, wobei diese Verlagerung mittels einer Gewindeverbindung oder dergleichen, zwischen einem Verschluss- und Führungsteil und einem Steuerungs- und Fixierungselement erfolgt und zwar um Abschnitte die zwischen den Fixiernestern liegen.

Findet die Dosiervorrichtung ihre Anwendung auf einem elastischen Behältnis, der senkecht bei der portionierten Entnahme seines Spendengutes gehalten wird, muss diese ein Steigrohr aufweisen.

Findet die Dosiervorrichtung ihre Anwendung auf einem elastischen Behältnis, der bei der portionierten Entnahme seines Spendengutes gekippt werden kann, braucht diese nur ein kurzes Versorgungsrohr, der eventuell zusammen mit einem Verschluss- und Führungsteil als ein Teil, gespritzt werden kann.

Das Funktionsprinzip einer erfindungsgemäßen Dosiervorrichtung mit einem Steigrohr, wobei das Behältnis bei der Ermittlung einer Spendengutportion senkrecht gehalten wird, besteht aus folgenden Schritten:
- ein Steuerungs- und Fixierungsteil ist soweit zu drehen, bis seine Fixierlasche in das vorgegebene Fixiernest des mit ihm zusammenwirkenden Messraumgehäuses, voll und zweckmäßig einrastet;
- jetzt ist die Abdeckkappe des Messraumes soweit zu öffnen, dass sie beim späteren Ausgießen der ermittelten Portion eines Spendengutes, nicht stört;
- durch eine gezielte Druckausübung auf die Wände des Behältnisses, ist der Messraum mit dem Spendengut bis oberhalb der Austrittsöffnung zu befüllen;
- während des Loslassen der Wände des Behältnisses, wird der Überschuss an dem Spendengut in das Behältnis zurückgesaugt und die vorher bestimmte Menge des Spendengutes präzise abgemessen;
- durch ein zweckmäßiges Umkippen des Behältnisses ist die Portion des Spendengutes zu entnehmen;
- jetzt ist das Steuerungs- und Fixierungselement soweit zurückzudrehen bis das Messraumgehäuse seine fixierte Ausgangsposition erreicht hat;
- durch Verschließen des Messraumes mit der Abdeckkappe erfolgt eine gleichzeitige Verschließung der Austrittsöffnung, ebenfalls mit einem dafür vorgesehenen Abschnitt dieser.

Das Funktionsprinzip einer erfindungsgemäßen Dosiervorrichtung ohne Steigrohr, wobei das Behältnis bei der Ermittlung einer Spendengutportion, cirka waagerecht zu halten ist, besteht aus folgenden Schritten:
- ein Steuerungs- und Fixierungsteil ist soweit zu drehen, bis seine Fixierlasche in das vorgegebene Fixiernest des mit ihm zusammenwirkenden Messraumes voll und zweckmäßig einrastet;
- jetzt ist die Abdeckkappe des Messraumes soweit zu öffnen, dass sie beim späteren Ausgießen der Portion eines Spendengutes nicht stört;
- jetzt ist das Behältnis in eine cirka waagerechte Position zu kippen und zu halten, wobei dabei darauf zu achten ist, dass die eventuell vorhandenen Spendengutreste nicht austreten;
- durch eine gezielte Druckausübung auf die Wände des Behältnisses, ist der Messraum mit dem Spendengut bis oberhalb der Austrittsöffnung zu befüllen;
- während des Loslassen der Wand des Behältnisses, wird der Überschuss an dem Spendengut in das Behältnis zurückgesaugt und die vorher bestimmte Menge des Spendengutes präzise abgemessen;
- durch ein zweckmäßiges Umkippen des Behältnisses ist die Portion des Spendengutes zu entnehmen;
- jetzt ist das Steuerungs- und Fixierungselement soweit zurückzudrehen bis das Messraumgehäuse seine fixierte Ausgangsposition erreicht hat;
- durch Verschließen des Messraumes mit der Abdeckkappe erfolgt eine gleichzeitige Verschließung der Austrittsöffnung, ebenfalls mit einem dafür vorgesehenen Abschnitt dieser;
- jetzt ist das Behältnis senkrecht zu richten und abzustellen.

Somit erreicht man erfindungsgemäß, dass ein Dosiervorgang von unterschiedlichen Mengen eines Spendengutes aus einem und derselben Messraum präzise erfolgen kann, wobei die Berührung mit einem Spendengut, bei einem sachgemäß durchgeführten Dosiervorgang, ausgeschlossen ist und die Spendengutreste an solcher Stelle sich sammeln, dass bei oben beschriebener, zweckmäßiger Aufbewahrung des Behälters, sich diese immer im unteren Bereich des Messraumes befinden und einen Abdeckkappen-Bereich nicht berühren.

Bei beiden Ausführungen der Dosiervorrichtung ist darauf zu achten, dass die Durchflusskanäle und die Öffnungen, der jeweilige Dicke eines Spendengutes so anzupassen sind, dass zum Beispiel deren Verklebung, auch nach längerer Lagerzeit, nicht erfolgen kann, was erfindungsgemäß mittels entsprechend großen Querschnitte, zu verhindern ist.

Diese Erfindung erlaubt ebenfalls eine, schon in ein Messraum herausgebrachte Portion eines Spendengutes mühelos zu vergrößern oder zu verkleinern, in dem die Position des Steuerungs- und Fixierungselementes und somit die Position des Messraumgehäuses gegenüber der Austritt- und Ansaugöffnung zweckmäßig, nach oben oder nach unten, verlagert wird und anschließend durch eine vorsichtige, erneute Druckausübung auf die elastische Wände des Spendenbehälters und seine Rückbildung, kann eine größere oder kleinere Spendengutmenge, ermittelt werden. Somit garantiert diese Erfindung nicht nur exakt ermittelbare Portionen eines Spendengutes, sondern auch die Möglichkeit ihrer Korrektur, bis zum dem Zeitpunkt, bevor dieses aus einem Messraum entnommen wird.

Die erfindungsgemäße Dosiervorrichtung ermittelt in ihrer Ausgangsposition die maximale Menge (Portion) eines Spendengutes und je mehr das Messraumgehäuse ausgefahren wird, desto kleinere Mengen (Portionen) bestimmt werden können, was ein wichtiges Merkmal der Erfindung ist.

Jede beliebige Kombination der einzelnen, oben beschriebenen Merkmale der Dosier- und Verschlussvorrichtung untereinander, ist ein wichtiger Inhalt dieser Erfindung. Erfindungsgemäß ist es vorgesehen, dass die Dosiervorrichtung sowohl als ein Einwegartikel oder als eine mehrfach anwendbare Vorrichtung benutzt werden kann, in dem beispielsweise ihr Verschluss- und Führungsteil ein Gewinde aufweist, mit dem sie mit einem Behältnis trennbar verbunden werden kann.

Erfindungsgemäß ist die Genauigkeit der dosierten Portion eines Spendengutes von der Größe des Durchmessers eines Messraumes abhängig, das heißt, je kleiner das Durchmesser eines Messraumes desto genauer die ermittelte Menge des Spendengutes, und umgekehrt, was ebenfalls ein wichtiges Merkmal der Erfindung ist.

Anhand der beigefügten Zeichnungen, die besonders bevorzugte Ausführungsbeispiele der Erfindung zeigen, jedoch die Erfindung nicht einschränken, wird diese nun näher beschrieben.

Kurzbeschreibung der Zeichnungen, in den zeigen:
- Figur 1: einen Längsschnitt über eine erfindungsgemäße Dosiervorrichtung mit Steig- rohr, die mit einem elastisch verformbaren Behältnis luftdicht verbunden ist.
- Figur 2: einen Längsschnitt, hauptsächlich über eine erfindungsgemäße Dosiervor- richtung, wobei hier sowohl das Messraum als auch die Austritt- und Ansaug- öffnung mittels einer zweckmäßig gestalteten Abdeckkappe verschlossen sind.
- Figur 3: einen Querschnitt entlang der Linie A-A aus der Figur 2, wobei hier deutlich zu erkennen ist, dass die Einrasteabschnitte im Steuerungs- und Fixierungsele- ment kleiner sind als die Ausnehmungen und somit kann dieses in einer ein- fachen Art und Weise kostengünstig hergestellt werden.
- Figur 4: eine Seitensicht auf eine besonders bevorzugte Ausführung einer erfindungs- gemäßen Dosiervorrichtung, wobei in dieser Position des Messraumgehäuses die maximale Portion, in diesem Beispiel 20 Einheiten, entnehmbar ist.
- Figur 5: die gleiche Ausführung der Dosiervorrichtung wie in der Figur 4, mit dem Unterschied, dass das Messraumgehäuse maximal nach oben verlagert wurde, wofür der Drehgriff soweit gedreht wurde, bis die Fixierlasche in eine Fixier- nest die für 5 Einheiten vorgesehen ist, einrastete.
- Figur 6: einen Längsschnitt über die Dosiervorrichtung aus der Figur 5. Hier ist deutlich sichtbar, dass der Faltenbalg sich maximal zusammengezogen hat.
- Figur 7: ein Verschluss- und Führungsteil das auf einem Ausschnitt eines Behältnisses luftdicht befestigt ist, im Längsschnitt. Hier ist deutlich sichtbar, dass ein Aus- tritt eines Spendengutes nur durch die Austritt- und Ansaugöffnung erfolgen kann. Auch das Gewinde mit einem relativ großen Sprung ist hier erkennbar.
- Figur 8: ein Messraumgehäuse samt einer Abdeckkappe, die mittels eines Scharniers an diesem kippbeweglich angeordnet ist, im Längsschnitt. Auch der einteilig angespritzte Faltenbalg in seiner zusammengezogenen Form ist hier erkennbar.
- Figur 9: ein Steuerungs- und Fixierungselement im Längsschnitt. Weiterhin sind hier die Einrasteabschnitte und der Gewinde in seinem rohrähnlichen Abschnitt sichtbar. Auch die Ausnehmungen und ihre spezifische Anordnung gegenüber den Einrasteabschnitte sind hier ebenfalls deutlich sichtbar.
- Figur 10: einen Längsschnitt über eine erfindungsgemäße Dosiervorrichtung mit kurzem Versorgungsrohr, die mit einem dafür spezifisch geformten, elastisch verform- baren Behältnis luftdicht verbunden ist
- Figur 11: einen Längsschnitt über die gleiche Dosiervorrichtung wie in der Figur 10, mit dem Unterschied, dass das Behältnis sich in der Ruheposition befindet.

### Wege zur Ausführung der Erfindung:

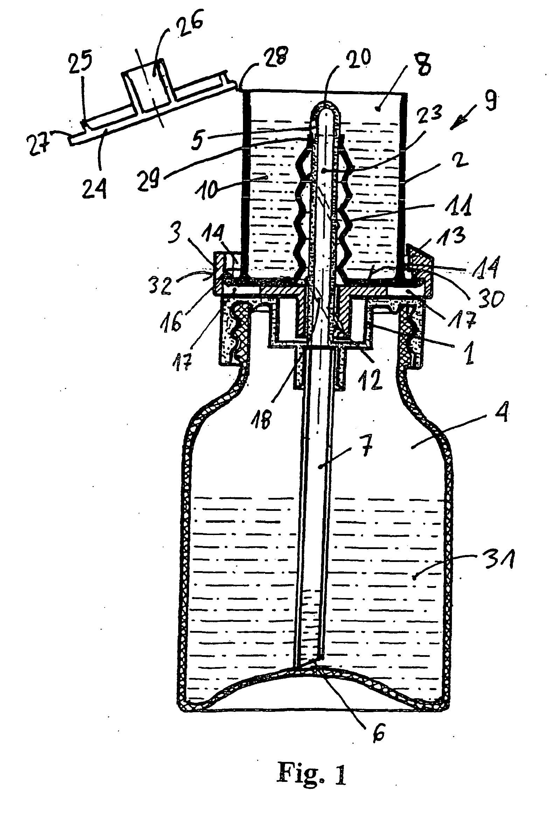

Die Figur 1 zeigt einen Längsschnitt über eine erfindungsgemäße Dosiervorrichtung (9) mit Steigrohr (7), die mit einem elastisch verformbaren Behältnis (4) luftdicht verbunden ist. Die Dosiervorrichtung (9) befindet sich in ihrer Ausgangsposition und somit wurde die maximale Portion eines Spendengutes ermittelt. Die geöffnet Abdeckkappe (24) deutet darauf hin, dass das Spendengut (10) entnommen werden kann, oder dass seine Menge reduziert werden kann in dem sie zurück in das Behältnis (4) eingesaugt werden kann.

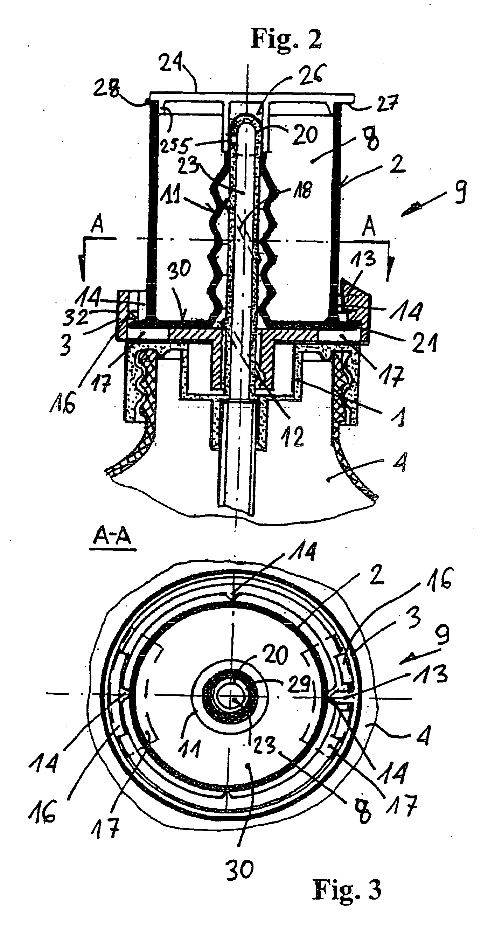

Figur 2 zeigt einen Längsschnitt, hauptsächlich über eine erfindungsgemäße Dosiervorrichtung (9), wobei hier sowohl das Messraum (8) als auch die Austritt- und Ansaugöffnung (5) mittels einer zweckmäßig gestalteten Abdeckkappe (24) verschlossen sind Auch die gleitende Anordnung des Messraumgehäuses (2) in einem Steuerung- und Fixierelement (3) sowie seine definierte Lenkung an einem Führungsröhrchen (20), mittels einer Gewindeverbindung (12) sind deutlich erkennbar. Auch das Einrasten des spezifisch gestalteten Einrastekragens eines Messraumgehäuses (21) unter die an ihn angepasste Einrasteabschnitte (16) sowie die ein Reiben reduzierende Ausnehmungen (17) in dem Steuerungs- und Fixierungselement (3), sind hier deutlich sichtbar.

Figur 3 zeigt einen Querschnitt entlang der Linie A-A aus der Figur 2, wobei hier deutlich zu erkennen ist, dass die Einrasteabschnitte (16) im Steuerungs- und Fixierungselement (3) kleiner sind als die Ausnehmungen (17) und somit kann dieses auf eine einfache Art und Weise kostengünstig hergestellt werden. Auch die axiale Anordnung eines Führungsröhrchens (20) in einem Messraum (8) ist hier sichtbar.

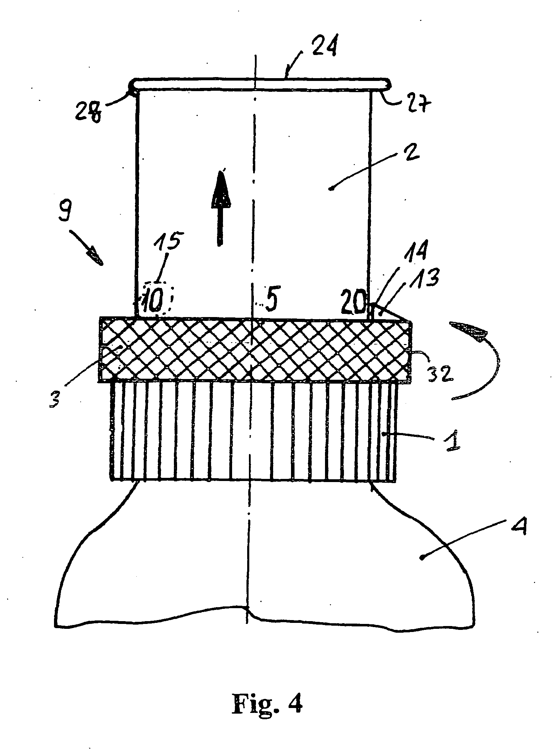

In der Figur 4 ist eine Seitensicht auf eine besonders bevorzugte Ausführung einer erfindungsgemäßen Dosiervorrichtung (4) dargestellt, wobei in dieser Position des Messraumgehäuses (2), die maximale Portion, in diesem Beispiel 20 Einheiten, entnehmbar ist. Hier wird mit jeder Verlagerung des Messraumgehäuses (2) nach oben, die jeweils ermittelbare Portion kleiner. Die Verlagerung des Messraumgehäuses (2) nach oben, ist durch Drehen des Drehgriffes (32) in Pfeilrichtung, zu erreichen.

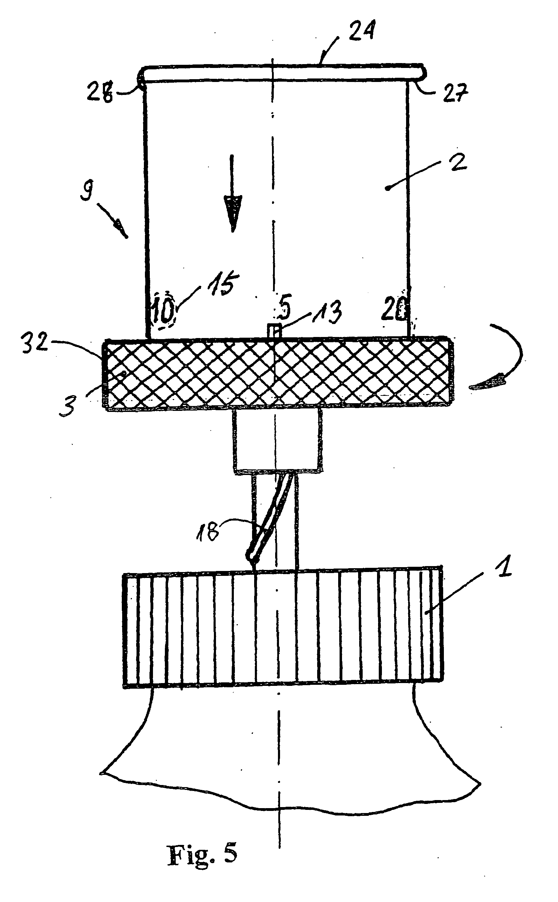

Figur 5 zeigt gleiche Sicht und gleiche Ausführung der Dosiervorrichtung (9) wie die Figur 4, mit dem Unterschied, dass das Messraumgehäuse (2) maximal nach oben verlagert wurde, wofür der Drehgriff soweit gedreht wurde, bis die Fixierlasche (13) in ein Fixiernest (14) das für 5 Einheiten vorgesehen ist, einrastete. Aus dieser Position kann das Messraumgehäuse (2) nur nach unten verlagert werden, wenn der Drehgriff (32) in der Pfeilrichtung gedreht wird

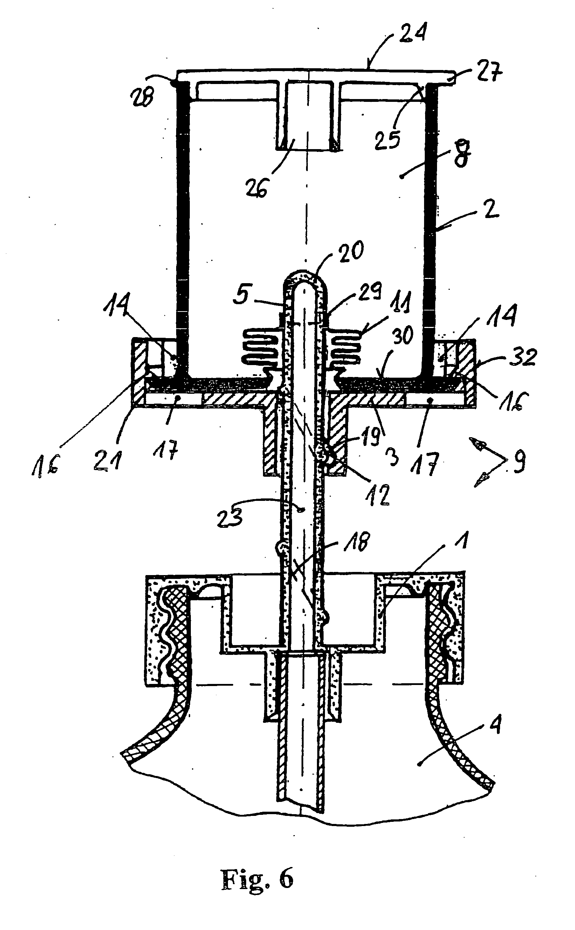

Figur 6 zeigt einen Längsschnitt über die Dosiervorrichtung (9) aus der Figur 5. Hier ist deutlich sichtbar, dass der Faltenbalg (11) sich maximal zusammengelegt hat. Wird das Messraumgehäuse (2) zweckmäßig nach unten verlagert, muss der Faltenbalg (11) sich adäquat dazu dehnen, was in den vorherigen Figuren deutlich sichtbar ist. Hier ist erkennbar, dass das Verschluss- und Führungsteil (1) das Behältnis (4) luftdicht abschließt, unabhängig davon wo sich das Steuerungs- und Führungselement (3) samt dem an ihn angekoppelten Messraumgehäuse (2), befindet.

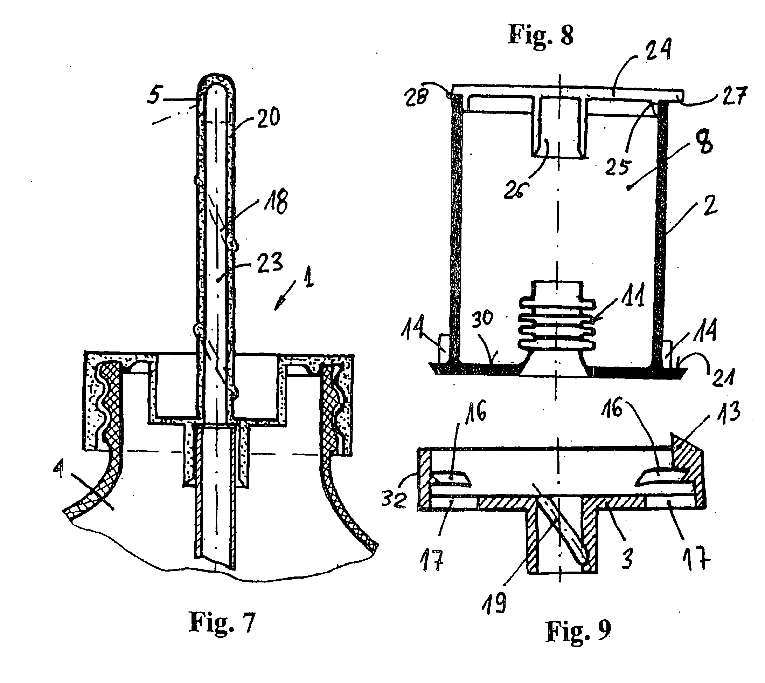

In der Figur 7 ist ein Verschluss- und Führungsteil (1), das auf einem Ausschnitt eines Behältnisses (4) luftdicht befestigt ist, im Längsschnitt dargestellt. Hier ist deutlich sichtbar, dass ein Austritt eines Spendengutes nur durch die Austritt- und Ansaugöffnung (5) erfolgen kann. Auch das Gewinde mit einem relativ großen Sprung am Führungsrohrchen (18) ist hier erkennbar.

Figur 8 zeigt ein Messraumgehäuse (2) samt einer Abdeckkappe (24), die mittels eines Scharniers (28) an diesem kippbeweglich angeordnet ist, im Längsschnitt. Auch der einteilig angespritzte Faltenbalg (11) in seiner zusammengezogenen Form, ist hier erkennbar.

Figur 9 zeigt ein Steuerungs- und Fixierungselement im Längsschnitt. Weiterhin sind hier die Einrasteabschnitte und der Gewinde in seinem rohrähnlichen Abschnitt sichtbar. Auch die Ausnehmungen und ihre spezifische Anordnung gegenüber den Einrasteabschnitten sind hier ebenfalls deutlich sichtbar.

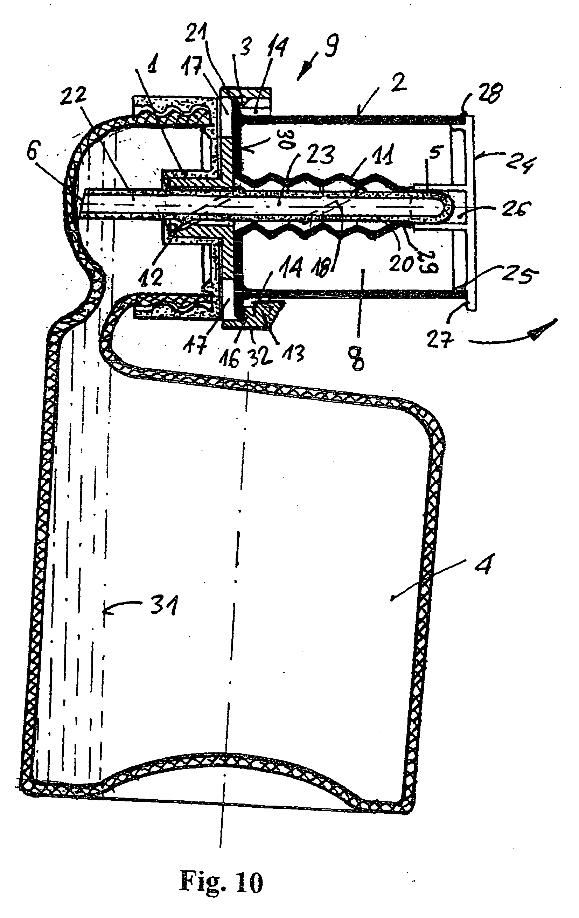

Figur 10 zeigt einen Längsschnitt über eine erfindungsgemäße Dosiervorrichtung (9) mit kurzem Versorgungsrohr (22), die mit einem dafür spezifisch geformten, elastisch verformbaren Behältnis (4) luftdicht verbunden ist. Um diese Dosiervorrichtung (9) anzuwenden, muss das Behältnis (4) zuerst in eine waagerechte Position gebracht werden und die Abdeckkappe (24) ausreichend weit geöffnet werden. Mittels des Drehens des Drehgriffe (32) ist die Fixierlasche (13) in ein gewähltes Fixiernest (14) zu verlagern. Durch einen Druck auf die elastischen Wände des Behältnisses (4) ist der Messraum (8) mit dem Spendengut zu überfüllten. Nach Loslassen der Wände entspannt sich das Behältnis (4) und dabei wird der Überfluss am Spendengut in ihn zurückgesaugt Jetzt kann die so bestimmte Portion des Spendengutes (10) auf eine beliebige Art und Weise entnommen werden.

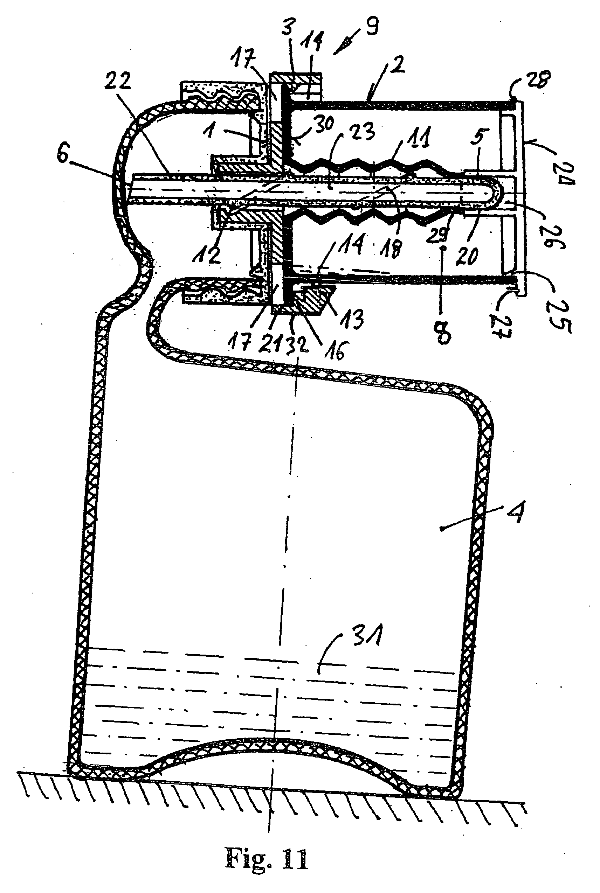

Figur 11 zeigt einen Längsschnitt über die gleiche Dosiervorrichtung (9) und den gleichen Behältnis (4), wie in der Figur 10, mit dem Unterschied, dass das Behältnis (4) sich in der Ruheposition befindet.

Es sei darauf aufmerksam gemacht, dass in den Figuren 1 bis 7 ein Steigrohr 7 mit einer unteren Einlassöffnung 6 vorgesehen ist, wobei dieses Steigrohr 7 mit seinem oberen Ende an die Einlassöffnung am untere Ende des Führungskanals 23 des Führungsröhrchens 20 dichtend anschließt. In den Figuren 10 und 11 hingegen schließt an das Führungsröhrchen 20 ein kurzes Versorgungsrohr 22 an, wobei in diesem Fall Führungsröhrchen und kurzes Versorgungsrohr einstückig ausgeführt sein können.

Eine erfindungsgemäße Dosiervorrichtung dient somit zu einem präzisen Dosieren von verschiedenen Portionen von flüssigem Spendengut aus einem Behältnis, die Dosiervorrichtung bestehend aus einem dauerhaft oder abnehmbar befestigbaren, mit einer Abdeckkappe verschließbaren Messraum eines Messraumgehäuses, wobei der Messraum mittels einer Einlassöffnung eines Führungskanals und einer Austritts-und Ansaugöffnung des Führungskanals mit flüssigem Spendengut aus dem Behältnis versorgt wird, wenn seine elastisch verformbare Wände zusammengedrückt werden.

Auf einem unbeweglich befestigten Verschluss- und Führungsteil, welches auf dem Behältnis angeordnet ist, ist ein Steuerungs- und Fixierungselement so drehbeweglich angeordnet und so mit ihm verbunden, dass jede seiner Drehbewegungen immer eine vorgegebene, axiale Verschiebung erzwingt, die sich direkt auf das mit ihm dauerhaft, jedoch gleitend verbundene Messraumgehäuse überträgt, wobei die gesamte axiale Verschiebung des Messraumgehäuses in vorgegebene Abschnitte aufgegliedert ist, die jeweils durch ein Einrasten einer Fixierlasche, die Bestandteil des Steuerungs- und Fixierungselementes ist, in ein Fixiernest, das Bestandsteil des Messraumgehäuses ist, definiert sind.

Beispielsweise besteht eine Dosiervorrichtung 9 aus einem dauerhaft oder abnehmbar befestigbaren, mit einer Abdeckkappe 24 verschließbaren Messraum 8 eines Messraumgehäuses 2, wobei der Messraum 8 mittels einer Einlassöffnung eines Führungskanal 23 innerhalb eines Führungsröhrchens 20 und einer Austritts-und Ansaugöffnung 5 des Führungskanals 23 mit flüssigem Spendengut aus dem Behältnis 4 versorgt wird, wenn seine elastisch verformbare Wände zusammengedrückt werden. Auf einem unbeweglich befestigten Verschluss- und Führungsteil 1 ist als Führung zentrisch das Führungsröhrchens 20 fest angeordnet. Auf dem Verschluss- und Führungsteil 1 ist ein Steuerungs- und Fixierungselement 3 so drehbeweglich angeordnet und so mit ihm verbunden, dass jede seiner Drehbewegungen um das Führungsröhrchens 20 herum immer eine vorgegebene, axiale Verschiebung erzwingt, die sich direkt auf das mit dem Steuerungs- und Fixierungselement 3 dauerhaft, jedoch gleitend verbundene Messraumgehäuse 2 überträgt. Die gesamte axiale Verschiebung des Messraumgehäuses 2 ist in vorgegebene Abschnitte aufgegliedert, die jeweils durch ein Einrasten einer Fixierlasche 13, die Bestandteil des Steuerungs- und Fixierungselementes 3 ist, in ein Fixiernest 14, das Bestandsteil des Messraumgehäuses 2 ist, definiert sind.

In einer weiteren erfindungsgemäßen Ausgestaltung der Dosiervorrichtung 9 besteht dieselbe aus einem dauerhaft oder abnehmbar befestigbaren, mit einer Abdeckkappe 24 verschließbaren Messraum 8 eines Messraumgehäuses 2, wobei der Messraum 8 mittels einer Einlassöffnung 6, einem Führungskanal 23 innerhalb des Führungsröhrchens 20 und einer Austritts- und Ansaugöffnung 5 des Führungskanals 23 des Führungsröhrchens 20 mit flüssigem Spendengut aus dem Behältnis versorgt wird, wenn seine elastisch verformbare Wände zusammengedrückt werden. Im Messraumgehäuse 2 ist zur Abdichtung zwischen dem Boden 30 und dem Führungsröhrchen 20 ein elastisch verformbarer Faltenbalg 11, in zweckmäßigen Länge, so luftdicht und dauerhaft angeordnet, dass er bei allen Höhendifferenzen zwischen der veränderbaren Lage des Messraumbodens 30 des Messraumgehäuses 2 und der unveränderbaren Lage der Austritts- und Ansaugöffnung 5 des Führungskanals 23 des Führungsröhrchens 20 immer eine ausreichende Abdichtung garantiert. Der Faltenbalg 11 ist somit dicht und fest sowohl am Messraumboden 30 als auch dicht und fest direkt unterhalb der Austritts- und Ansaugöffnung 5 des Führungsröhrchens 20 befestigt.

In weiterer erfindungsgemäßer Ausgestaltung der Dosiervorrichtung geschieht die Verbindung des Steuerungs- und Fixierungselements 3 gegenüber dem feststehenden Führungsröhrchen 20 und deren gegenseitige Bewegung mittels eines Gewindes 12, welches vorzugsweise eine große Steigung aufweist. Das Führungsröhrchen 20 weist hierzu ein Außengewinde 12 auf, auf welchem sich das Steuerungs- und Fixierungselement 3 als Mutter bei seiner Drehung herauf oder herunterschraubt und dabei das auf das Steuerungs- und Fixierungselement 3 aufgesetzte Messraumgehäuse 2 mitnimmt. Eine minimale Spendengutportion 10 aus dem Messraumgehäuse 2 ist dabei bei maximal ausgefahrenen Messgehäuse 2 gegeben; eine maximale Spendengutportion 10 ist in der Ausgangsposition des Messraumgehäuses 2 an seinem tiefsten Punkt gegeben.

Sowohl das Befüllen des Messraumes 8 des Messraumgehäuses 2 mit einem Spendengut 31 als auch ein anschließendes Rücksaugen des Überschusses des Spendengutes aus dem Messraum 8 geschieht immer über die Einlassöffnung 6 des Führungskanals 23 des Führungsröhrchens 20 und einer Austritt- und Ansaugöffnung 5 des Führungskanals 23 des Führungsröhrchens 20.

In weiterer erfindungsgemäßer Ausgestaltung der Dosiervorrichtung ist eine Abdeckkappe 24 so zu gestalten, dass sie sowohl den Messraum 8 als auch die Austritt- und Ansaugöffnung 5 abdichtet, wenn das Messraumgehäuse 2 sich in seiner Ausgangsposition befindet bzw. maximal eingefahren ist.

Sowohl der Querschnitt des Führungskanals 23 des Führungsröhrchens 20 als auch die Größe der Austritt- und Ansaugöffnung 5 desselben sind an die Viskosität eines damit zu dosierenden Spendengutes zweckmäßig anzupassen.

In weiterer erfindungsgemäßer Ausgestaltung der Dosiervorrichtung kann jedem Fixiernest 14 eine Markierung 15 in Form einer Zahl, einer Farbe, eines Symbols oder dergleichen, deutlich erkennbar, zugeordnet sein.

Verfahrensmäßig kann des Weiteren zur portionierten Entnahme eines Spendengutes aus einem senkrecht gehaltenem Behältnis mit einem Steigrohr, unter Verwendung der vorgenannten Dosiervorrichtung, zuerst mittels einer Drehbewegung eines Steuerungs- und Fixierungselementes 3 eine gewünschte Menge einer Spendengutportion 10 festgelegt werden, in dem eine Fixierlasche 13 in ein vorgegebenes Fixiernest 14 einrastet und anschließend die Abdeckkappe 24 soweit zu öffnen ist, dass sie beim späteren Ausgießen einer Spendengutportion 10 nicht stört. Weiterhin ist der Messraum 8 bis oberhalb der Austritts- und Ansaugöffnung 5 mit dem Spendengut zu befüllen, in dem auf die elastische Wände des Behältnisses 4 zweckmäßig gedrückt wird, anschließend werden die gedrückten Wände losgelassen, wobei während dieses Vorgangs der Spendengutüberschuss oberhalb der Austritts- und Ansaugöffnung 5 in das Behältnis 4 zurückgesaugt wird. Jetzt kann die so ermittelte Spendengutportion 10 auf eine beliebige Art und Weise entnommen werden.

Verfahrensmäßig kann des Weiteren zur portionierten Entnahme eines Spendengutes aus einem waagerecht gehaltenen Behältnis mit einem kurzen Versorgungsrohr, unter Verwendung der vorgenannten Dosiervorrichtung, zuerst die Abdeckkappe 24 zweckmäßig geöffnet, das Behältnis 4 in eine waagerechte Position verlagert, und anschließend mittels einer Drehbewegung eines Steuerungs- und Fixierungselementes 3 eine gewünschte Menge des Spendengutes 10 festgelegt werden, in dem die Fixierlasche 13 in ein vorgegebenes Fixiernest 14 einrastet und weiterhin ist der Messraum 8, bis oberhalb von Austritts- und Ansaugöffnung 5, mit dem Spendengut zu befüllen, in dem auf die elastische Wände des Behältnisses 4 zweckmäßig gedrückt wird. Anschließend werden die gedrückten Wände losgelassen, wobei während dieses Vorgangs der Überschuss an Spendengut in das Behältnis 4 zurückgesaugt wird. Jetzt kann die so ermittelte Spendengutportion 10 auf eine beliebige Art und Weise entnommen werden.

Ebenso kann verfahrensmäßig eine Spendengutmenge im Messraum einer Dosiervorrichtung nachträglich korrigiert werden. Wenn eine schon in den Messraum 8 ausgebrachte Spendengutportion 10 nachträglich reduziert werden soll, ist das Steuerungs- und Fixierungselement 3 mitsamt dem Messraumgehäuse 2 in die neue Position zu verlagern, bis die Fixierlasche 13 in das Fixiernest 14 zweckmäßig eingreift und diese Position fixiert. Durch ein erneutes Zusammenzudrücken der Wände des Behältnisses 4 wird erreicht, dass wenigstens ein Teil der dazwischen liegenden Luft aus dem Behältnis 4 entweicht und durch anschließende, langsame Rücknahme des Drucks erfolgt eine Rücksaugung mindestens eines Teils der überschüssigen Menge des Spendenguts in das Behältnis 4 zurück. Wenn notwendig, ist dieser Vorgang zu wiederholen.

### Gewerbliche Anwendbarkeit.

Der Gegenstand der Erfindung ist gewerblich anwendbar bei der Herstellung von Verschluss- und Dosiervorrichtungen, die insbesondere zur Dosierung von kostengünstigen, flüssigen oder pastösen Produkten vorgesehen sind.

### Liste der Bezugszeichen:

- 1.: Verschluss- und Führungsteil
- 2.: Messraumgehäuse
- 3-: Steuerungs- und Fixierungselement
- 4.: Behältnis
- 5.: Austritt- und Ansaugöffnung
- 6.: Einlassöffnung
- 7.: Steigrohr
- 8.: Messraum
- 9.: Dosiervorrichtung
- 10.: Spendengut als Portion
- 11.: elastisch verformbarer Faltenbalg
- 12.: Gewindeverbindung
- 13.: Fixierlasche
- 14.: Fixiernest
- 15.: Zahl als Markierung
- 16.: Einrasteabschnitt am Steuerungs- und Fixierungselement
- 17.: Ausnehmung im Steuerungs- und Fixierungselement
- 18.: Gewinde am Führungsröhrchen
- 19.: Gewinde im Steuerungs- und Fixierungselement
- 20.: Führungsröhrchen
- 21.: Einrastekragen am Messraumgehäuse
- 22.: kurzes Versorgungsrohr
- 23.: Führungskanal
- 24.: Abdeckkappe
- 25.: Abdichtungsbereich für ein Messraum
- 26.: Abdichtungsbereich einer Austritt- und Ansaugöffnung
- 27.: Griff an einer Abdeckkappe
- 28.: Scharniere zwischen Abdeckkappe und Messraumgehäuse
- 29.: luftdichte und dauerhafte Verbindung zwischen Faltenbalg und Fuhrungsröhrchen
- 30.: Boden eines Messraumes
- 31.: Spendengut im Behältnis
- 32.: Drehgriff

## Patentansprüche

1. Dosiervorrichtung (9) zum präzisen Dosieren von verschiedenen Portionen von flüssigem Spendengut aus einem Behältnis (4) mit elastisch verformbaren Wänden, bestehend aus einem auf das Behältnis (4) luftdicht aufgesetzte Verschlussteil (1) und aus einem darauf aufgesetzten Messraumgehäuse (2), welches einen Messraum (8) aufweist, welcher beim Zusammendrücken der elastisch verformbaren Wände des Behältnisses über ein in das Behältnis ragende Steigrohr (7, 22) mit einer unteren Einlassöffnung (6), einem Führungskanal (23) und einer oberen Austritts- und Ansaugöffnung (5) mit flüssigem Spendengut aus dem Behältnis versorgbar ist, wobei das Messraumgehäuse auf dem Steigrohr höhenveränderlich angeordnet ist, wobei auf dem Verschlussteil (1) des Behältnisses (4) ein die obere Austritts- und Ansaugöffnung (5) aufweisendes Führungsröhrchen (20) fest angeordnet ist, welches in Fortsetzung des Steigrohres (7) mit demselben in Verbindung steht,
**dadurch gekennzeichnet,**
**dass** das Führungsröhrchen (20) ein Außengewinde (18) aufweist, auf welchem ein Steuerungs- und Fixierungselement (3) als Mutter gemäß dem Schraube-Mutter-Prinzip drehbeweglich angeordnet ist, wobei auf das Steuerungs- und Fixierungselement (3) das Messraumgehäuse (2) aufgesetzt ist, welches bei Drehen des Steuerungs- und Fixierungselements (3) zwingend eine axiale Verschiebung erfährt, und dass auf dem in den Messraum (8) ragende Führungsröhrchen (20) ein elastisch verformbarer Faltenbalg (11) angeordnet ist, welcher dicht und fest sowohl am Boden (30) des Messraumes (8) als auch unterhalb der Austritts- und Ansaugöffnung (5) des Führungsröhrchens (20) an demselben befestigt ist.

2. Dosiervorrichtung nach Anspruch 1, **dadurch gekennzeichnet,**
**dass** der Faltenbalg (11) als Bestandteil des Messraumgehäuses (2) angefertigt ist, wobei nur der obere Abschnitt des Faltenbalges (11) mit dem Führungsröhrchen (20) unterhalb der Austritts- und Ansaugöffnung (5) desselben luftdicht und dauerhaft verbunden ist.

3. Dosiervorrichtung nach Anspruch 1 oder 2, **dadurch gekennzeichnet,**
**dass** die gesamte axiale Verschiebung des Messraumgehäuses (2) in vorgegebene Abschnitte aufgegliedert ist, die jeweils durch ein Einrasten einer Fixierlasche (13), die Bestandteil des Steuerungs- und Fixierungselementes (3) ist, in ein Fixiernest (14), das Bestandsteil des Messraumgehäuses (2) ist, definiert sind, wobei jedem Fixiernest (14) eine bestimmte Menge des Spendengutes zugeordnet ist.

4. Dosiervorrichtung nach einem der vorherigen Ansprüche,
**dadurch gekennzeichnet, dass** das Außengewinde (12) des Führungsröhrchens (20) eine große Steigung aufweist, wobei eine minimale Spendengutportion (10) aus dem Messraumgehäuse (2) bei maximal ausgefahrenen Messgehäuse (2) und eine maximale Spendengutportion (10) in der Ausgangsposition des Messraumgehäuses (2) an seinem tiefsten Punkt auf dem Führungsröhrchen (20) gegeben ist.

5. Dosiervorrichtung nach einem der vorherigen Ansprüche,
**dadurch gekennzeichnet, dass** auf dem Messraumgehäuse (2) eine Abdeckkappe (24) zum Verschließen des Messraumes (8) angeordnet ist,

6. Dosiervorrichtung nach Anspruch 5, **dadurch gekennzeichnet,**
**dass** die Abdeckkappe (24) einen Abdichtungsbereich (26) für die Austritt- und Ansaugöffnung (5) des Führungsröhrchens (20) aufweist, so dass die Abdeckkappe (24) sowohl den Messraum (8) als auch die Austritt- und Ansaugöffnung (5) abdichtet, wenn das Messraumgehäuse (2) sich in seiner Ausgangsposition befindet bzw. maximal eingefahren ist.

7. Dosiervorrichtung nach Anspruch 3, **dadurch gekennzeichnet,**
**dass** die Steigung des Außengewindes (18) des Führungsröhrchens (20) derart gewählt ist, dass alle Fixiernester (14) des Messraumgehäuses (2) innerhalb einer geringeren Drehbewegung des Steuerungs- und Fixierungselements (3) als 360 Grad zu erreichen sind.

8. Dosiervorrichtung nach Anspruch 1, **dadurch gekennzeichnet,**
**dass** bei der Verwendung derselben auf einem Behälter, der bei der portionierten Entnahme von Spendengut zu kippen ist, sich an das Führungsröhrchen (20) ein kurzes Versorgungsrohr (22) anschließt, wobei Führungsröhrchen und Versorgungsrohr einstückig ausgeführt sind.

9. Dosiervorrichtung nach Anspruch 1 oder 2, **dadurch gekennzeichnet,**
**dass** die Verbindung zwischen Faltenbalg (11) und Führungsröhrchen (20) immer so stark sein muss, dass ein ungewolltes Herausfallen des Messraumgehäuses immer verhindert wird.

10. Dosiervorrichtung nach Anspruch 3, **dadurch gekennzeichnet,**
**dass** jedem Fixiernest (14) eine Markierung (15) in Form einer Zahl, einer Farbe, eines Symbols oder dergleichen, deutlich erkennbar, zugeordnet ist.

## Claims

1. A dosing device (9) for precisely dosing different portions of a liquid product to be dispensed from a container (4) with elastically deformable walls, consisting of a closure part (1) that is placed air-tight onto the container (4), and consisting of a measuring chamber housing (2) that is placed onto said container (4) and that has a measuring chamber (8) that, when the elastically deformable walls of the container are compressed, is supplied with a liquid product from the container via a riser (7, 22) that has a lower inlet opening (6), a feed channel (23) and an upper outlet and intake opening (5), whereby the measuring chamber housing is arranged on the riser so as to be height-adjustable, whereby a feed tube (20) having the upper outlet and intake opening (5) is firmly arranged on the closure part (1) of the container (4), said feed tube (20) being connected to the riser (7) as a continuation thereof,
**characterized in that**
the feed tube (20) has an external thread (18) on which a control and fixation element (3) is arranged rotatably as a nut according to the nut-and-screw principle, whereby the measuring chamber housing (2) is placed onto the control and fixation element (3) and said housing necessarily executes an axial movement when the control and fixation element (3) is rotated, and **in that**, on the feed tube (20) that extends into the measuring chamber (8), there is an elastically deformable bellows (11) that can be attached tightly and firmly onto the bottom (30) of the measuring chamber (8) as well as onto the measuring chamber (8) underneath the outlet and intake opening (5) of the feed tube (20).

2. The dosing device according to Claim 1,
**characterized in that**
the bellows (11) is configured as an integral part of the measuring chamber housing (2), whereby only the upper section of the bellows (11) is connected air-tight and firmly to the feed tube (20) underneath the outlet and intake opening (5) thereof.

3. The dosing device according to Claim 1 or 2,
**characterized in that**
the entire axial movement of the measuring chamber housing (2) is divided into predefined segments that are each defined by the latching of a fixation tab (13) - which is an integral part of the control and fixation element (3) - into a fixation member (14) that is an integral part of the measuring chamber housing (2), whereby each fixation member (14) is associated with a certain amount of the product to be dispensed.

4. The dosing device according to one of the preceding claims,
**characterized in that**
the external thread (12) of the feed tube (20) has a large pitch, whereby a minimal portion of the product to be dispensed (10) from the measuring chamber housing (2) is available when the measuring chamber housing (2) is extended to the maximum, and a maximal portion of the product to be dispensed (10) is available in the starting position of the measuring chamber housing (2) at its lowest point on the feed tube (20).

5. The dosing device according to one of the preceding claims,
**characterized in that**
a cap (24) is arranged on the measuring chamber housing (2) for purposes of closing the measuring chamber (8).

6. The dosing device according to Claim 5,
**characterized in that**
the cap (24) has a sealing area (26) for the outlet and intake opening (5) of the feed tube (20), so that the cap (24) seals the measuring chamber (8) as well as the outlet and intake opening (5) when the measuring chamber housing (2) is in its starting position or retracted to the maximum.

7. The dosing device according to Claim 3,
**characterized in that**
the pitch of the external thread (18) of the feed tube (20) is selected in such a way that all of the fixation members (14) of the measuring chamber housing (2) can be accessed within a rotational movement of the control and fixation element (3) that is smaller than 360 degrees.

8. The dosing device according to Claim 1,
**characterized in that**,
when said dosing device is used on a container that has to be tipped during the portioned removal of a product to be dispensed, a short supply tube (22) is attached to the feed tube (20), whereby the feed tube and the supply tube are configured in one piece.

9. The dosing device according to Claim 1 or 2,
**characterized in that**
the connection between the bellows (11) and the feed tube (20) always has to be so strong that the tube is always prevented from unintentionally falling out of the measuring chamber housing.

10. The dosing device according to Claim 3,
**characterized in that**
a marking (15) in the form of a number, a color, a symbol or the like is associated with each fixation member (14) in a clearly recognizable manner.

## Revendications

1. Dispositif de dosage (9) pour le dosage précis de différentes portions d'un produit liquide à délivrer et contenu dans un contenant (4) présentant des parois élastiquement déformables, comportant une partie de fermeture (1) placée de façon étanche à l'air sur le contenant (4) et un boîtier de la chambre de mesure (2) placé sur ladite partie de fermeture et logeant une chambre de mesure (8) laquelle, lors de la compression des parois élastiquement déformables du contenant, peut être alimentée en produit liquide à délivrer contenu dans le contenant via un tube de montée (7, 22) s'avançant dans le contenant et présentant un orifice d'admission (6), un canal de guidage (23) et un orifice supérieur de sortie et d'aspiration (5), le boîtier de la chambre de mesure étant disposé variable en hauteur sur le tube de montée et un tube de guidage (20) présentant l'orifice supérieur de sortie et d'aspiration (5) étant disposé de façon fixe sur la partie de fermeture (1) du contenant (4), ledit tube de guidage qui prolonge le tube de montée (7) communiquant avec ce dernier,
**caractérisé en ce que**
le tube de guidage (20) présente un filetage extérieur (18) sur lequel est disposé un élément de commande et de fixation (3) en tant qu'écrou de manière à pouvoir tourner selon le principe vis-écrou, le boîtier de la chambre de mesure (2) étant placé sur l'élément de commande et de fixation (3) et décrivant impérativement un déplacement axial lors de la rotation de l'élément de guidage et de fixation (3), et **en ce qu'**un soufflet (11) élastiquement déformable est disposé sur le tube de guidage (20) s'avançant dans la chambre de mesure (8), ledit soufflet étant fixé fermement et hermétiquement aussi bien contre le fond (30) de la chambre de mesure (8) que contre le tube de guidage (20) en dessous de l'orifice de sortie et d'aspiration (5) de celui-ci.

2. Dispositif de dosage selon la revendication 1, **caractérisé en ce que** le soufflet (11) est réalisé en tant qu'élément constitutif du boîter de la chambre de mesure (2), et que seulement la section supérieure du soufflet (11) est reliée durablement et de façon étanche à l'air au tube de guidage (20) en dessous de l'orifice de sortie et d'aspiration (5) de celui-ci.

3. Dispositif de dosage selon la revendication 1 ou 2, **caractérisé en ce que**
le déplacement axial d'ensemble du boîtier de la chambre de mesure (2) est subdivisé en sections préfixées dont chacune est définie par l'encliquetage d'une patte de fixation (13) faisant partie de l'élément de commande et de fixation (3), dans une cavité de fixation (14) faisant partie du boîtier de la chambre de mesure (2), une quantité déterminée de produit à délivrer étant attribuée à chaque cavité de fixation (14).

4. Dispositif de dosage selon l'une des revendications précitées,
**caractérisé en ce que** le filetage extérieur (12) du tube de guidage (20) présente un grand pas, une portion minimale de produit à délivrer (10) du boîtier de la chambre de mesure (2) étant donnée lorsque le boîtier de la chambre de mesure (2) est sorti en sa position maximale et une portion maximale de produit à délivrer (10) étant donnée lorsque le boîtier de la chambre de mesure (2) se trouve en sa position de départ au point le plus bas sur le tube de guidage (20).

5. Dispositif de dosage selon l'une des revendications précitées,
**caractérisé en ce qu'**un capuchon (24) destiné à fermer la chambre de mesure (8) est disposé sur le boîtier de la chambre de mesure (2).

6. Dispositif de dosage selon la revendication 5, **caractérisé en ce que**
le capuchon (24) présente une zone d'étanchéité (26) pour l'orifice de sortie et d'aspiration (5) du tube de guidage (20), de sorte que le capuchon (24) obture hermétiquement tant la chambre de mesure (8) que l'orifice de sortie et d'aspiration (5), lorsque le boîtier de la chambre de mesure (2) se trouve en position de départ, à savoir en position rentrée au maximum.

7. Dispositif de dosage selon la revendication 3, **caractérisé en ce que**
le pas du filetage extérieur (18) du tube de guidage (20) est choisi de sorte que toutes les cavités de fixation (14) du boîtier de la chambre de mesure (2) peuvent être atteintes avec un mouvement de rotation de l'élément de commande et de fixation (3) inférieur à 360 degrés.

8. Dispositif de dosage selon la revendication 1, **caractérisé en que**
lorsqu'on utilise ledit dispositif sur un contenant qui doit être basculé pour le prélèvement portionné du produit à délivrer, le tube de guidage (20) est complété par un tube d'alimentation court (22), le tube de guidage et le tube d'alimentation étant réalisés en un seule pièce.

9. Dispositif de dosage selon la revendication 1 ou 2, **caractérisé en ce que**
le raccordement entre le soufflet (11) et le tube de guidage (20) doit toujours être assez fort pour empêcher toute chute accidentelle du boîtier de la chambre de mesure.

10. Dispositif de dosage selon la revendication 3, **caractérisé en ce qu'**
un marquage (15) sous forme d'un chiffre, d'une couleur, d'un symbole etc. est attribué de façon clairement identifiable à chacune des cavités de fixation (14).
